# EUROPEAN PATENT APPLICATION

(11) **EP 4 132 050 A1**
(43) Date of publication of application: **08.02.2023**
(21) Application number: 21189478.7
(22) Date of filing: 03.08.2021
(51) Int. Cl.: H04W 12/08, H04W 12/10

(54) **METHOD FOR OPERATING OR FOR MODIFYING THE OPERATION OF A USER EQUIPMENT WITHIN OR AS PART OF A TELECOMMUNICATIONS NETWORK USING A CONTROL PLANE FUNCTIONALITY, USER EQUIPMENT, SYSTEM OR TELECOMMUNICATIONS NETWORK, AUTHORIZATION FUNCTIONALITY, PROGRAM AND COMPUTER PROGRAM PRODUCT**

(71) Applicant: Deutsche Telekom AG, 53113 Bonn (DE)
(72) Inventor: COLOM IKUNO, Josep, 2100 Korneuburg (AT); LAUSTER, Reinhard, 3100 St. Pölten (AT)
(74) Representative: Schwöbel, Thilo K.

(57) **Abstract**

The invention relates to a method for operating a user equipment within or as part of a telecommunications network, the telecommunications network comprising or being associated or assigned to an access network and to a core network,
wherein the user equipment comprises or provides at least one functional and addressable service endpoint for providing or exposing a service or a functionality to a requesting entity or requesting network node external to the user equipment,
wherein, in order to operate the user equipment and in view of providing, by a specific service endpoint of the user equipment, a specific service or a specific functionality to the requesting entity or requesting network node, the method comprises the following steps:
-- in a first step, the user equipment receives, from the requesting entity or requesting network node or on behalf of the requesting entity or requesting network node, a request message, the request message being related to the specific service endpoint, and wherein the request message
-- relates to or uses a specific application programming interface functionality provided by the specific service endpoint

and/or
-- relates to or comprises a specific address information related to the specific service endpoint,
-- in a second step, the specific service endpoint processes the received request message according to its content.

## Description

### BACKGROUND

The present invention relates a method for operating or for modifying the operation of a user equipment within or as part of a telecommunications network, wherein the operation or the modification of the operation of the user equipment is conducted using a control plane functionality, wherein the user equipment comprises or provides a parameter-related functionality for operating or for modifying the operation of the user equipment upon a request by a requesting entity or a requesting network node external to the user equipment, wherein the requesting entity or the requesting network node is part of the access network or of the core network.

Furthermore, the present invention relates to a user equipment for being operated or for applying a modified operation within or as part of a telecommunications network, wherein the operation or the modification of the operation of the user equipment is conducted using a control plane functionality, wherein the user equipment comprises or provides a parameter-related functionality for operating or for modifying the operation of the user equipment upon a request by a requesting entity or a requesting network node external to the user equipment, wherein the requesting entity or the requesting network node is part of the access network or of the core network.

Additionally, the present invention relates to a system or telecommunications network for operating or for modifying the operation of a user equipment within or as part of the telecommunications network, wherein the operation or the modification of the operation of the user equipment is conducted using a control plane functionality, wherein the user equipment comprises or provides a parameter-related functionality for operating or for modifying the operation of the user equipment upon a request by a requesting entity or a requesting network node external to the user equipment, wherein the requesting entity or the requesting network node is part of the access network or of the core network.

Additionally, the present invention relates to an authorization functionality of a system or telecommunications network according to the present invention.

Furthermore, the present invention relates to a program and to a computer-readable medium for operating or for modifying the operation of a user equipment within or as part of a telecommunications network according to the inventive method.

In conventionally known telecommunications networks, the functionality and/or the current or future mode of operation of a user equipment (within or as part of the telecommunications network) is typically accessible ― at least regarding some very important or critical configuration parameters ― only to the home public land mobile network (or home network) of the user equipment, i.e. only able to be changed or modified by the home network. Other, non-critical, configuration parameters might also be set or changed by either the visited public land mobile network (or visited network) and/or by the user of the user equipment, however, this is often involves either only weak authentication or no authentication at all.

### SUMMARY

An object of the present invention is to provide a technically simple, effective and cost effective solution for operating or for modifying the operation of a user equipment within or as part of a telecommunications network, wherein the operation or the modification of the operation of the user equipment is conducted using a control plane functionality. A further object of the present invention is to provide a corresponding user equipment, system or mobile communication network, authorization functionality, and a corresponding program and computer-readable medium.

The object of the present invention is achieved by a method for operating or for modifying the operation of a user equipment within or as part of a telecommunications network, wherein the operation or the modification of the operation of the user equipment is conducted using a control plane functionality,
wherein the telecommunications network comprises or is associated or assigned to an access network and to a core network, wherein the core network provides the user equipment with data connectivity towards a data network,
wherein the user equipment comprises or provides a parameter-related functionality for operating or for modifying the operation of the user equipment upon a request by a requesting entity or a requesting network node external to the user equipment, wherein the requesting entity or the requesting network node is part of the access network or of the core network,
wherein the parameter-related functionality is related or corresponds to a control plane functionality, and wherein the parameter-related functionality, as a control plane functionality or related therewith, communicates with or is accessible to a control plane network element of the telecommunications network, via a control plane channel, wherein the telecommunications network comprises or is assigned to or is able to access an authorization functionality, the authorization functionality being able to provide authorization information regarding or related to the parameter-related functionality of the user equipment,
wherein, in order to operate or to modify the operation of the user equipment, the method comprises the following steps:
   -- in a first step, the user equipment receives, from the authorization functionality, at least one piece of authorization information, and the user equipment receives, from the requesting entity or the requesting network node, an authorization request message,
   -- in a second step, the user equipment determines whether the authorization request is valid, and if this is the case, processes the received authorization request message according to its content.

It is thereby advantageously possible according to the present invention that by the user equipment receiving both the at least one piece of authorization information, and the authorization request message, it is possible, for the user equipment, to determine whether the request message (received from the requesting entity or the requesting network node) is legitimate and/or to be trusted or not.

According to the present invention, it is advantageously possible to realize an increased level of security regarding the configuration and/or operation of a user equipment, or the modification of its operation, within or as part of a telecommunications network. According to the present invention, it is especially proposed to apply application programming interface-based delegated authorization (e.g. OAuth) principles in order to modify configuration parameters on the user equipment and/or on the subscriber identity module (such as a universal subscriber identity module, USIM).

In conventionally used or operated telecommunications networks, there are only two categories of access:
-- -user equipment parameters or USIM parameters that only the home public land mobile network (or home network) is able to or is allowed to change, or
-- user equipment parameters or USIM parameters that also the visited public land mobile network (or visited network) or the user of the user equipment is able to or is allowed to change.

This limits the flexibility regarding the possibility of desirable or necessary user equipment configurations or modes of operation of user equipments or their modfications and/or furthermore this might also limit the level or security and/or trust regarding the definition of the configuration of such parameters or their modification.

According to the present invention, it is advantageously possible to add more flexibility to the interactions between networks. With the introduction of campus networks and network slices, it is expected that the number of networks and the level of relationship with some of them will be more complex than just "V-PLMN or H-PLMN" Additionally agreements may be constrained to certain time durations and/or locations and/or third parties (e.g. enterprises). This is not possible in conventionally known telecommunications networks.

Furthermore according to the present invention, it is advantageously possible to realize or to enable one or a plurality out of the following:
-- a third party authorization to allow cross-subscription parameter changes if the home network authorizes such changes;
-- constrain access/changes to certain parameters (especially by means of modulating or varying a token validity) to certain conditions (e.g. location, time), and constrain validity of changes conditional on whether certain conditions are met or not (e.g. changes are reverted once conditions are not met anymore, e.g. moved location, agreement between two network operators changed);
-- add more flexibility to the interactions between networks.

According to the present invention, a control plane functionality is used for configuring or for operating or for modifying the operation of a user equipment within or as part of a telecommunications network.

The telecommunications network typically comprises an access network and a core network. However, the present invention is also related to situations where the telecommunications network does not comprise, strictly speaking, both an access network and a core network, but where the telecommunications network is only associated or assigned to an access network (and especially comprises the core network), or where the telecommunications network is only associated or assigned to a core network (and especially comprise the access network), or where the telecommunications network is only associated or assigned to both an access network and a core network. According to the present invention, the core network especially provides the user equipment with data connectivity towards a data network, hence the core network, at least partly, realizes 5G functionality.

According to the present invention, the user equipment comprises or provides a parameter-related functionality for operating or for modifying the operation of the user equipment upon a request by a requesting entity or a requesting network node external to the user equipment. The parameter-related functionality might be realized as or correspond to a configuration parameter of either the user equipment or a part or component there (such as, e.g., a subscriber identity module such as a SIM card or USIM) wherein the configuration parameter is able to be set or modified. According to the present invention, the parameter-related functionality or functionalities (or each parameter-related functionality) relates to or corresponds to an authorization function or authorization functions. An authorization function is linked to one or a plurality of (configuration) parameters of the user equipment, e.g. in the subscriber identity module (SIM card or USIM) and/or linked to the subscription of a specific network.

Especially, the requesting entity or the requesting network node is part of the access network or of the core network.

According to the present invention, the parameter-related functionality is related or corresponds to a control plane functionality, and parameter-related functionality - as a control plane functionality or related therewith - communicates with or is accessible to a control plane network element (or to a plurality of control plane network elements) of the telecommunications network, via a control plane channel. Especially the control plane element corresponds to an access and mobility management function of the core network, and the control plane channel corresponds to an interface between the user equipment and the control plane element, i.e. a signaling channel. This is in contrast, according to the present invention, to using a user plane functionality, e.g. between a user equipment application and a data network.

Furthermore according to the present invention, the telecommunications network comprises or is assigned to or is able to access an authorization functionality, the authorization functionality being able to provide authorization information regarding or related to the parameter-related functionality of the user equipment, and, in order to operate or to modify the operation of the user equipment, the method comprises the following steps:
-- in a first step, the user equipment receives, from the authorization functionality, at least one piece of authorization information, and the user equipment receives, from the requesting entity or the requesting network node, an authorization request message,
-- in a second step, the user equipment determines whether the authorization request is valid, and if this is the case, processes the received authorization request message according to its content.

According to the present invention, it is advantageously possible that, in a third step, the requesting entity or the requesting network node transmits an initial authorization request message to the authorization functionality, wherein the initial authorization request message comprises a request content, wherein the transmission of the initial authorization request message to the authorization functionality causes the authorization functionality to transmit the at least one piece of authorization information to the user equipment and to transmit further authorization information to the requesting entity or the requesting network node.

It is thereby advantageously possible that prior to the requesting entity or the requesting network node changing the configuration of the user equipment, the authorization functionality is involved such that the intended modification of the configuration of the user equipment is able to be authorized by the authorization functionality.

According to the present invention, it is furthermore advantageously possible and preferred that the third step involves the authorization functionality to determine whether the requesting entity or the requesting network node is allowed to request, from the user equipment, the request content.

It is thereby advantageously possible according to the present invention that the authorization functionality performs the check as to whether the requesting entity or the requesting network node is indeed entitled to request to trigger the intended modification of the configuration of the user equipment.

According to the present invention, it is furthermore advantageously possible and preferred that a control plane channel acts as transport channel for a user plane channel by means of encapsulation or vice-versa, especially for the transmission of the at least one piece of authorization information and/or for the transmission of the authorization request message.

Furthermore, it is advantageously possible and preferred according to the present invention that
-- modifying the operation of the user equipment according to the request content provided by the requesting entity or requesting network node, and/or
-- providing, by the parameter-related functionality of the user equipment, a service or the functionality to the requesting entity or requesting network node involves at least one of the following:
   -- the modification of a parameter of or used by the user equipment, especially a parameter influencing the operation of the user equipment,
   -- the production of a service or of a functionality, by the user equipment or its parameter-related functionality, to the requesting entity or requesting network node.

Thereby, it is advantageously possible to apply the inventive method for almost any kind of configuration or configuration change of or within the user equipment or of any part or module or component of the user equipment.

Furthermore, it is advantageously possible and preferred according to the present invention that the piece of authorization information is or corresponds to or comprises a token information, wherein the token information or the token information in modified form is also part of the authorization request message.

Thereby, it is advantageously possible that by means of using a token information as or as part of the authorization information a comparatively high level of security is possible to be realized; especially the token information is able to correspond to an encrypted (and/or signed) version of an information such that only the user equipment is able to decrypt it (and/or to verify its signature).

According to a further preferred embodiment of the present invention, the authorization information comprises security information in order for the user equipment to be able to validate or to determine the integrity of the authorization request message received from the requesting entity or the requesting network node.

Thereby, it is advantageously possible that the level of security is still enhanced.

According to a further preferred embodiment of the present invention, the authorization information and/or the authorization request message comprise additional condition information, the condition information comprising an indication regarding the validity and/or regarding the applicability of the authorization request message with regard to at least one out of the following:
-- a specific time period,
-- a specific geographical area.

It is thereby advantageously possible to provide for a fine grained implementation when applying any configuration or modification regarding the operation of the user equipment, especially involving different kinds of conditions, e.g. regarding time, location, use of certain services and/or radio access technologies, certain operational states of the user equipment or the like.

According to a further preferred embodiment of the present invention, the requesting entity or the requesting network node corresponds to at least one out of the following components within a 5G system or IP multimedia subsystem, IMS system:
-- gNB
-- access and mobility management function, AMF, session management function, SMF, user plane function, UPF, unified data management, UDM, policy and charging function, PCF, short message service function, SMSF, non-3GPP interworking function, N3IWF, charging function, CHF, network exchange function, NEF, network data analytics function, NWDAF, network repository function, NRF, gateway mobile location centre, GMLC,
-- serving call state control function, S-CSCF, proxy call state control function, P-CSCF, interrogating call state control function, I-CSCF.

Furthermore, it is advantageously possible and preferred according to the present invention that the parameter-related functionality and/or the specific application programming interface functionality provided by the parameter-related functionality within the user equipment, expose one or more of the following functionalities within a mobile communications system:
-- mobility management, session management, short message service, user equipment policy, location services,
-- USIM,
-- IP multimedia subsystem managed object, IMS MO.

Furthermore, the present invention relates to a user equipment for being operated or for applying a modified operation within or as part of a telecommunications network, wherein the operation or the modification of the operation of the user equipment is conducted using a control plane functionality,
wherein the telecommunications network comprises or is associated or assigned to an access network and to a core network, wherein the core network provides the user equipment with data connectivity towards a data network,
wherein the user equipment comprises or provides a parameter-related functionality for operating or for modifying the operation of the user equipment upon a request by a requesting entity or a requesting network node external to the user equipment, wherein the requesting entity or the requesting network node is part of the access network or of the core network,
wherein the parameter-related functionality is related or corresponds to a control plane functionality, and wherein the parameter-related functionality, as a control plane functionality or related therewith, communicates with or is accessible to a control plane network element of the telecommunications network, via a control plane channel, wherein the user equipment is configured to interact with an authorization functionality, the authorization functionality being able to provide authorization information regarding or related to the parameter-related functionality of the user equipment,
wherein, in order to operate or to modify the operation of the user equipment, the user equipment is configured such that:
   -- the user equipment receives, from the authorization functionality, at least one piece of authorization information, and the user equipment receives, from the requesting entity or the requesting network node, an authorization request message,
   -- the user equipment determines whether the authorization request is valid, and if this is the case, processes the received authorization request message according to its content.

Furthermore, the present invention relates to a system or telecommunications network for operating or for modifying the operation of a user equipment within or as part of the telecommunications network, wherein the operation or the modification of the operation of the user equipment is conducted using a control plane functionality, wherein the telecommunications network comprises or is associated or assigned to an access network and to a core network, wherein the core network provides the user equipment with data connectivity towards a data network, wherein the user equipment comprises or provides a parameter-related functionality for operating or for modifying the operation of the user equipment upon a request by a requesting entity or a requesting network node external to the user equipment, wherein the requesting entity or the requesting network node is part of the access network or of the core network, wherein the parameter-related functionality is related or corresponds to a control plane functionality, and wherein the parameter-related functionality, as a control plane functionality or related therewith, communicates with or is accessible to a control plane network element of the telecommunications network, via a control plane channel, wherein the telecommunications network comprises or is assigned to or is able to access an authorization functionality, the authorization functionality being able to provide authorization information regarding or related to the parameter-related functionality of the user equipment, wherein, in order to operate or to modify the operation of the user equipment, the system of telecommunications network is configured such that:
-- the authorization functionality transmits at least one piece of authorization information to the user equipment, and the requesting entity or the requesting network node transmits an authorization request message to the user equipment,
-- the user equipment is configured to determine whether the authorization request is valid, and if this is the case, to process the received authorization request message according to its content.

Still additionally, the present invention relates to an authorization functionality of an inventive system or an inventive telecommunications network.

Additionally, the present invention relates to a program comprising a computer readable program code and/or a computer-readable medium comprising instructions, which, when executed on a computer and/or on a user equipment and/or on a authorization functionality and/or on a network node of a telecommunications network, or in part on a user equipment and/or in part on an authorization functionality and/or in part on a network node of a telecommunications network, causes the computer and/or the user equipment and/or the authorization functionality and/or the network node of the telecommunications network to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, wherein the user equipment comprises or provides a parameter-related functionality for operating or for modifying the operation of the user equipment upon a request by a requesting entity or a requesting network node external to the user equipment, and wherein the core network comprises an authorization functionality.
Figure 2 schematically illustrates a user equipment comprising a plurality of parameter-related functionalities for operating or for modifying the operation of the user equipment.
Figure 3 schematically illustrates a communication diagram between the user equipment, the requesting entity or the requesting network node external to the user equipment, and the authorization functionality.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

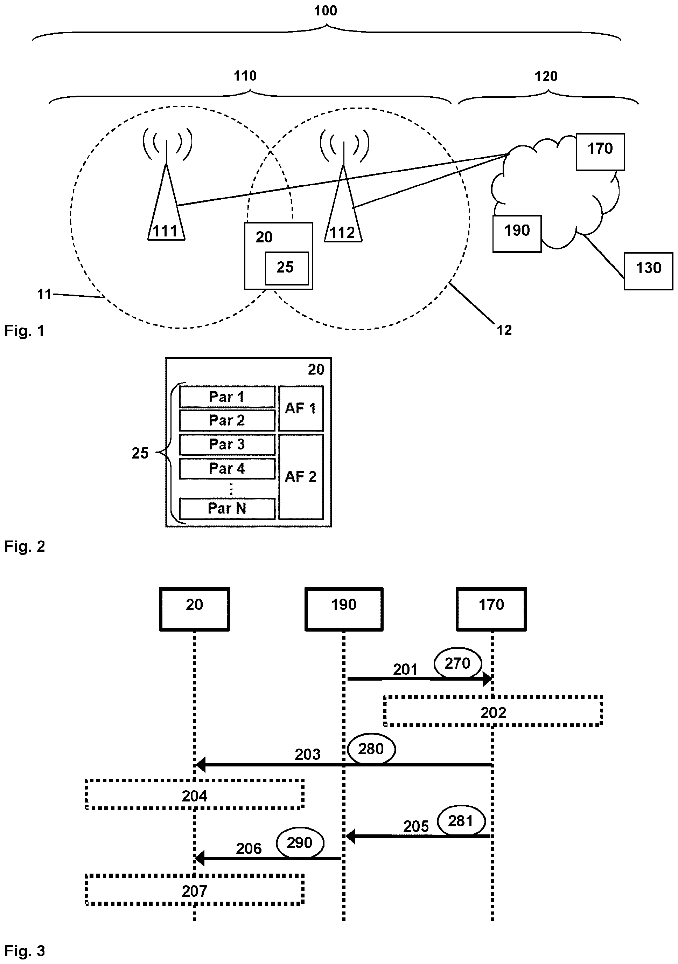

In Figure 1, a telecommunications network 100 comprising an access network 110, and a core network 120 is schematically shown. The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. A user equipment 20 comprises or provides a parameter-related functionality 25 for operating or for modifying the operation of the user equipment 20 upon a request by a requesting entity or a requesting network node 190 external to the user equipment 20, and wherein the core network 120 comprises an authorization functionality 170. Especially, the requesting entity or the requesting network node 190 is part of the access network 110 or of the core network 120. The user equipment 20 is typically, but not necessarily, mobile i.e. able to move with respect to the (typically, but not necessarily static) radio cells 11, 12 or corresponding base station entities 111, 112 of the access network 110. In the exemplarily represented illustration of Figure 1, the core network 120 comprises an authorization functionality 170. Alternatively to the telecommunications network 100 comprising the authorization functionality 170, the telecommunications network 100 might also be assigned to or merely able to access the authorization functionality 170. Furthermore, the core network 120 is connected to a data network 130. The core network 120 provides the user equipment 20 with data connectivity towards the data network 130.

According to the present invention, the user equipment 20 is operated or configured or its operation or mode of operation modified using a control plane functionality of the telecommunications network 100.

According to the present invention - as in conventionally known telecommunications networks -, the telecommunications network 100 realizes a separation of a control plane from a user plane in the communication between the user equipment 20, the access network 110 (or radio access network 110), and the core network 120 of the telecommunications network 100. As in conventionally known telecommunications networks, the telecommunications network 100 comprises different levels of signaling, each with different anchoring (non-access stratum/N1 interface between the user equipment 20 and the core network 120, and radio resource control between the user equipment 20 and the radio access network 110 (or access network 110). An access and mobility management function 121 serves as control plane anchor and a user plane function 122 serves as user plane anchor. As interfaces between the core network 120 and the access network 110, the SCTP is used for the control plane 101, and the GTP-U is used for the user plane 102.

According to the present invention, the user equipment 20 comprises or provides a parameter-related functionality 25 for operating or for modifying the operation of the user equipment 20 upon a request by the requesting entity or the requesting network node 190 external to the user equipment 20.

The parameter-related functionality 25 is related or corresponds to a control plane functionality, and the parameter-related functionality 25, as a control plane functionality or related therewith, communicates with or is accessible to a control plane network element (typically an access and mobility management function) of the telecommunications network 100, via a control plane channel.

According to the present invention, the authorization functionality 170 is able to provide authorization information regarding or related to the parameter-related functionality 25 of the user equipment 20.

In Figure 2, the user equipment 20 comprising a plurality of parameter-related functionalities 25 for operating or for modifying the operation of the user equipment 20 is schematically shown. The user equipment 20 comprises a plurality of different parameter-related functionalities 25, indicated by means of reference signs Par 1, Par 2, Par 3, Par 4..., Par N, and AF 1 and AF 2 (authorization functions 1 and 2). According to the present invention, components or network elements especially of the access network 110 (or radio access network 110), and/or network functions or network elements of the core network 120 (corresponding to the requesting entity or the requesting network node 190, respectively) are able to send a signaling message to the user equipment 20 relating to or using or modifying one of the parameter-related functionalities 25 (related to and/or corresponding to authorization functions) of the user equipment 20.

According to the present invention, in order to operate or to modify the operation of the user equipment 20, the method according to the present invention comprises the following steps:
-- in a first step, the user equipment 20 receives, from the authorization functionality 170, at least one piece of authorization information 280, and the user equipment 20 receives, from the requesting entity or the requesting network node 190, an authorization request message 290,
-- in a second step, the user equipment 20 determines whether the authorization request 290 is valid, and if this is the case, processes the received authorization request message 290 according to its content.

According to a preferred embodiment according to the present invention, in a third step (especially but not necessarily completely preceding the first step), the requesting entity or the requesting network node 190 transmits an initial authorization request message 270 to the authorization functionality 170, wherein the initial authorization request message 270 comprises a request content, wherein the transmission of the initial authorization request message 270 to the authorization functionality 170 causes the authorization functionality 170 to transmit the at least one piece of authorization information 280 to the user equipment 20 and to transmit further authorization information 281 to the requesting entity or the requesting network node 190.

In Figure 3, all these three steps (i.e. the transmission of the initial authorization request message 270 to the authorization functionality 170, the transmission of the authorization information 280 as well as of the authorization request message 290 to the user equipment 20, the transmission of the further authorization information 281 to the requesting entity or the requesting network node 190, and the determination whether the authorization request 290 is valid) are schematically shown. Figure 3 schematically illustrates a communication diagram between the user equipment 20, the requesting entity or the requesting network node 190 external to the user equipment 20, and the authorization functionality 170.

In a first processing step 201, the requesting entity or the requesting network node 190 transmits the initial authorization request message 270 to the authorization functionality 170, thereby requesting or triggering the authorization information 280 (especially in the form of or comprising a token information) to be sent to the user equipment 20. Already the initial authorization request message 270 especially relates to a specific one parameter-related functionality 25 (also called 'parameter X') of the parameter-related functionalities 25 of the user equipment 20 or to a specific plurality of (or subset) of parameter-related functionalities 25 of the parameter-related functionalities 25 of the user equipment 20, e.g. the initial authorization request message 270 requests a token to write parameter X.

In a second processing step 202, the authorization functionality 170 evaluates whether the requesting entity or the requesting network node 190 (e.g. especially a core network element A (or also network element of another telecommunications network, different from the telecommunications network 100)) is allowed to request the modification or configuration related to the specific one parameter-related functionality 25 or the specific plurality (or subset) of parameter-related functionalities 25 of the user equipment 20. In case this evaluation results in a positive outcome, the flow is continued to the third processing step 203.

In the third processing step 203, the authorization functionality 170 transmits the at least one piece of authorization information 280 to the user equipment 20, thereby informing the user equipment 20 about the authorization of the requesting entity or the requesting network node 190 to access or to write or to configure an information or a parameter related to the specific one parameter-related functionality 25 ('parameter X') or the specific plurality (or subset) of parameter-related functionalities 25 of the user equipment 20, e.g. by means of a message "Token-X allowed access to write parameter X".

In a fourth processing step 204, the user equipment 20 stores at least part of the authorization information 280 or derives or is able to derive an information from the authorization information 280 ("Token-X configuration stored by the user equipment 20, authorization function (or parameter-related functionality) being configured by the authorization functionality 170 UAF").

In a fifth processing step 205, the authorization functionality 170 transmits further authorization information 281 to the requesting entity or the requesting network node 190, especially comprising the token information ("Token X").

In a sixth processing step 206, the requesting entity or the requesting network node 190 transmits the authorization request message 290 to the user equipment 20. The authorization request message 290 comprises the request which parameter or which parameter-related functionality 25 or which authorization function 25 is to be accessed or modified and in which manner (especially which parameter is requested to be changed how). Furthermore, the authorization request message 290 also comprises the authorization information 280 or part thereof. Hence, the authorization request message 290 might be of the form "Write parameter X + Token-X". The fifth or the fifth and the sixth processing steps 205, 206 could alternatively also occur prior to the third processing step 203.

In a seventh processing step 207, the user equipment 20 evaluates the authorization request message 280, and performs the requested modification of the parameter-related functionality 25 or of the authorization function 25 ("Evaluate request + Token-X Write value in parameter X").

Hence by means of the present invention, it is advantageously possible to provide a very flexible mechanism to transmit configuration information to the user equipment and/or to apply changes in the mode of operation or the configuration of the user equipment in a secure manner, i.e. authorization functionality 170 acts as a gatekeeper (or authorization provider) for other network entities or network elements or requesting entities ― be it of the same telecommunications network 100 of the user equipment 20 or of another telecommunications network ― to request to apply a certain configuration or a certain configuration change. Especially due to such an enhanced flexibility and adaptability of the user equipment operation, it is advantageously possible according to the present invention the authorization information 280 and/or the authorization request message 290 comprise additional condition information, the condition information comprising an indication regarding the validity and/or regarding the applicability of the authorization request message 290 with regard to at least one out of the following: a specific time period and a specific geographical area. Hence additionally, it is possible to add conditions by either the core network element or the authorization functionality 170 such that the authorization information (especially the token information) has a conditional validity: Besides stipulating an expiration (i.e. a time expiration), mobile-network-specific conditions (i.e. conditions of the telecommunications network 100) such as the following could be added to the token validity (validity of the authorization information) so that:
-- The token (authorization information) is only valid if the user equipment 20 is located in a certain location, tracking area, and/or is using a certain access (e.g. only for non-3GPP access).
-- The token validity (or validity of the authorization information) is permanently revoked if certain conditions are met (e.g. the user equipment leaves a certain area).

## Claims

1. Method for operating or for modifying the operation of a user equipment (20) within or as part of a telecommunications network (100), wherein the operation or the modification of the operation of the user equipment (20) is conducted using a control plane functionality,
wherein the telecommunications network (100) comprises or is associated or assigned to an access network (110) and to a core network (120), wherein the core network (120) provides the user equipment (20) with data connectivity towards a data network (130),
wherein the user equipment (20) comprises or provides a parameter-related functionality (25) for operating or for modifying the operation of the user equipment (20) upon a request by a requesting entity or a requesting network node (190) external to the user equipment (20), wherein the requesting entity or the requesting network node (190) is part of the access network (110) or of the core network (120),
wherein the parameter-related functionality (25) is related or corresponds to a control plane functionality, and wherein the parameter-related functionality (25), as a control plane functionality or related therewith, communicates with or is accessible to a control plane network element of the telecommunications network (100), via a control plane channel,
wherein the telecommunications network (100) comprises or is assigned to or is able to access an authorization functionality (170), the authorization functionality (170) being able to provide authorization information regarding or related to the parameter-related functionality (25) of the user equipment (20), wherein, in order to operate or to modify the operation of the user equipment (20), the method comprises the following steps:
-- in a first step, the user equipment (20) receives, from the authorization functionality (170), at least one piece of authorization information (280), and the user equipment (20) receives, from the requesting entity or the requesting network node (190), an authorization request message (290),
-- in a second step, the user equipment (20) determines whether the authorization request (290) is valid, and if this is the case, processes the received authorization request message (290) according to its content.

2. Method according to claim 1, wherein, in a third step, the requesting entity or the requesting network node (190) transmits an initial authorization request message (270) to the authorization functionality (170), wherein the initial authorization request message (270) comprises a request content, wherein the transmission of the initial authorization request message (270) to the authorization functionality (170) causes the authorization functionality (170) to transmit the at least one piece of authorization information (280) to the user equipment (20) and to transmit further authorization information (281) to the requesting entity or the requesting network node (190).

3. Method according to one of the preceding claims, wherein the third step involves the authorization functionality (170) to determine whether the requesting entity or the requesting network node (190) is allowed to request, from the user equipment (20), the request content.

4. Method according to one of the preceding claims, wherein a control plane channel acts as transport channel for a user plane channel by means of encapsulation or vice-versa, especially for the transmission of the at least one piece of authorization information (280) and/or for the transmission of the authorization request message (290).

5. Method according to one of the preceding claims, wherein
-- modifying the operation of the user equipment (20) according to the request content provided by the requesting entity or requesting network node (190), and/or
-- providing, by the parameter-related functionality (25) of the user equipment (20), a service or the functionality to the requesting entity or requesting network node (190)
involves at least one of the following:
-- the modification of a parameter of or used by the user equipment (20), especially a parameter influencing the operation of the user equipment (20),
-- the production of a service or of a functionality, by the user equipment (20) or its parameter-related functionality (25), to the requesting entity or requesting network node (190).

6. Method according to one of the preceding claims, wherein the piece of authorization information (280) is or corresponds to or comprises a token information, wherein the token information or the token information in modified form is also part of the authorization request message (290).

7. Method according to one of the preceding claims, wherein the authorization information (280) comprises security information in order for the user equipment (20) to be able to validate or to determine the integrity of the authorization request message (290) received from the requesting entity or the requesting network node (190).

8. Method according to one of the preceding claims, wherein the authorization information (280) and/or the authorization request message (290) comprise additional condition information, the condition information comprising an indication regarding the validity and/or regarding the applicability of the authorization request message (290) with regard to at least one out of the following:
-- a specific time period,
-- a specific geographical area.

9. Method according to one of the preceding claims, wherein the requesting entity or the requesting network node (190) corresponds to at least one out of the following components within a 5G system or IP multimedia subsystem, IMS system:
-- gNB
-- access and mobility management function, AMF, session management function, SMF, user plane function, UPF, unified data management, UDM, policy and charging function, PCF, short message service function, SMSF, non-3GPP interworking function, N3IWF, charging function, CHF, network exchange function, NEF, network data analytics function, NWDAF, network repository function, NRF, gateway mobile location centre, GMLC,
-- serving call state control function, S-CSCF, proxy call state control function, P-CSCF, interrogating call state control function, I-CSCF.

10. Method according to one of the preceding claims, wherein the parameter-related functionality (25) and/or the specific application programming interface functionality provided by the parameter-related functionality (25) within the user equipment (20), expose one or more of the following functionalities within a mobile communications system:
-- mobility management, session management, short message service, user equipment policy, location services,
-- USIM,
-- IP multimedia subsystem managed object, IMS MO.

11. User equipment (20) for being operated or for applying a modified operation within or as part of a telecommunications network (100), wherein the operation or the modification of the operation of the user equipment (20) is conducted using a control plane functionality,
wherein the telecommunications network (100) comprises or is associated or assigned to an access network (110) and to a core network (120), wherein the core network (120) provides the user equipment (20) with data connectivity towards a data network (130),
wherein the user equipment (20) comprises or provides a parameter-related functionality (25) for operating or for modifying the operation of the user equipment (20) upon a request by a requesting entity or a requesting network node (190) external to the user equipment (20), wherein the requesting entity or the requesting network node (190) is part of the access network (110) or of the core network (120),
wherein the parameter-related functionality (25) is related or corresponds to a control plane functionality, and wherein the parameter-related functionality (25), as a control plane functionality or related therewith, communicates with or is accessible to a control plane network element of the telecommunications network (100), via a control plane channel,
wherein the user equipment (20) is configured to interact with an authorization functionality (170), the authorization functionality (170) being able to provide authorization information regarding or related to the parameter-related functionality (25) of the user equipment (20),
wherein, in order to operate or to modify the operation of the user equipment (20), the user equipment (20) is configured such that:
-- the user equipment (20) receives, from the authorization functionality (170), at least one piece of authorization information (280), and the user equipment (20) receives, from the requesting entity or the requesting network node (190), an authorization request message (290),
-- the user equipment (20) determines whether the authorization request (290) is valid, and if this is the case, processes the received authorization request message (290) according to its content.

12. System or telecommunications network (100) for operating or for modifying the operation of a user equipment (20) within or as part of the telecommunications network (100), wherein the operation or the modification of the operation of the user equipment (20) is conducted using a control plane functionality,
wherein the telecommunications network (100) comprises or is associated or assigned to an access network (110) and to a core network (120), wherein the core network (120) provides the user equipment (20) with data connectivity towards a data network (130),
wherein the user equipment (20) comprises or provides a parameter-related functionality (25) for operating or for modifying the operation of the user equipment (20) upon a request by a requesting entity or a requesting network node (190) external to the user equipment (20), wherein the requesting entity or the requesting network node (190) is part of the access network (110) or of the core network (120),
wherein the parameter-related functionality (25) is related or corresponds to a control plane functionality, and wherein the parameter-related functionality (25), as a control plane functionality or related therewith, communicates with or is accessible to a control plane network element of the telecommunications network (100), via a control plane channel,
wherein the telecommunications network (100) comprises or is assigned to or is able to access an authorization functionality (170), the authorization functionality (170) being able to provide authorization information regarding or related to the parameter-related functionality (25) of the user equipment (20), wherein, in order to operate or to modify the operation of the user equipment (20), the system of telecommunications network (100) is configured such that:
-- the authorization functionality (170) transmits at least one piece of authorization information (280) to the user equipment (20), and the requesting entity or the requesting network node (190) transmits an authorization request message (290) to the user equipment (20),
-- the user equipment (20) is configured to determine whether the authorization request (290) is valid, and if this is the case, to process the received authorization request message (290) according to its content.

13. Authorization functionality (170) of a system or a telecommunications network (100) according to claim 12.

14. Program comprising a computer readable program code which, when executed on a computer and/or on a user equipment (20) and/or on a authorization functionality (170) and/or on a network node of a telecommunications network (100), or in part on a user equipment (20) and/or in part on an authorization functionality (170) and/or in part on a network node of a telecommunications network (100), causes the computer and/or the user equipment (20) and/or the authorization functionality (170) and/or the network node of the telecommunications network (100) to perform a method according one of claims 1 to 10.

15. Computer-readable medium comprising instructions which, when executed on a computer and/or on a user equipment (20) and/or on a authorization functionality (170) and/or on a network node of a telecommunications network (100), or in part on a user equipment (20) and/or in part on an authorization functionality (170) and/or in part on a network node of a telecommunications network (100), causes the computer and/or the user equipment (20) and/or the authorization functionality (170) and/or the network node of the telecommunications network (100) to perform a method according one of claims 1 to 10.

## Amended claims

### Amended claims in accordance with Rule 137(2) EPC.

1. Method for operating or for modifying the operation of a user equipment (20) within or as part of a telecommunications network (100), wherein the operation or the modification of the operation of the user equipment (20) is conducted using a control plane functionality,
wherein the telecommunications network (100) comprises or is associated or assigned to an access network (110) and to a core network (120), wherein the core network (120) provides the user equipment (20) with data connectivity towards a data network (130),
wherein the user equipment (20) comprises or provides a parameter-related functionality (25) for operating or for modifying the operation of the user equipment (20) upon a request by a requesting entity or a requesting network node (190) external to the user equipment (20), wherein the requesting entity or the requesting network node (190) is part of the access network (110) or of the core network (120),
wherein the parameter-related functionality (25) is related or corresponds to a control plane functionality, and wherein the parameter-related functionality (25), as a control plane functionality or related therewith, communicates with or is accessible to a control plane network element of the telecommunications network (100), via a control plane channel,
wherein the telecommunications network (100) comprises or is assigned to or is able to access an authorization functionality (170), the authorization functionality (170) being able to provide authorization information regarding or related to the parameter-related functionality (25) of the user equipment (20), wherein, in order to operate or to modify the operation of the user equipment (20), the method comprises the following steps:
-- in a first step, the user equipment (20) receives, from the authorization functionality (170), at least one piece of authorization information (280), and the user equipment (20) receives, from the requesting entity or the requesting network node (190), an authorization request message (290),
-- in a second step, the user equipment (20) determines whether the authorization request (290) is valid, and if this is the case, processes the received authorization request message (290) according to its content.

2. Method according to claim 1, wherein, in a third step, the requesting entity or the requesting network node (190) transmits an initial authorization request message (270) to the authorization functionality (170), wherein the initial authorization request message (270) comprises a request content, wherein the transmission of the initial authorization request message (270) to the authorization functionality (170) causes the authorization functionality (170) to transmit the at least one piece of authorization information (280) to the user equipment (20) and to transmit further authorization information (281) to the requesting entity or the requesting network node (190).

3. Method according to one of the preceding claims, wherein the third step involves the authorization functionality (170) to determine whether the requesting entity or the requesting network node (190) is allowed to request, from the user equipment (20), the request content.

4. Method according to one of the preceding claims, wherein a control plane channel acts as transport channel for a user plane channel by means of encapsulation or vice-versa, especially for the transmission of the at least one piece of authorization information (280) and/or for the transmission of the authorization request message (290).

5. Method according to one of the preceding claims, wherein
-- modifying the operation of the user equipment (20) according to the request content provided by the requesting entity or requesting network node (190), and/or
-- providing, by the parameter-related functionality (25) of the user equipment (20), a service or the functionality to the requesting entity or requesting network node (190)
involves at least one of the following:
-- the modification of a parameter of or used by the user equipment (20), especially a parameter influencing the operation of the user equipment (20),
-- the production of a service or of a functionality, by the user equipment (20) or its parameter-related functionality (25), to the requesting entity or requesting network node (190).

6. Method according to one of the preceding claims, wherein the piece of authorization information (280) is or corresponds to or comprises a token information, wherein the token information or the token information in modified form is also part of the authorization request message (290).

7. Method according to one of the preceding claims, wherein the authorization information (280) comprises security information in order for the user equipment (20) to be able to validate or to determine the integrity of the authorization request message (290) received from the requesting entity or the requesting network node (190).

8. Method according to one of the preceding claims, wherein the authorization information (280) and/or the authorization request message (290) comprise additional condition information, the condition information comprising an indication regarding the validity and/or regarding the applicability of the authorization request message (290) with regard to at least one out of the following:
-- a specific time period,
-- a specific geographical area.

9. Method according to one of the preceding claims, wherein the requesting entity or the requesting network node (190) corresponds to at least one out of the following components within a 5G system or IP multimedia subsystem, IMS system:
-- gNB
-- access and mobility management function, AMF, session management function, SMF, user plane function, UPF, unified data management, UDM, policy and charging function, PCF, short message service function, SMSF, non-3GPP interworking function, N3IWF, charging function, CHF, network exchange function, NEF, network data analytics function, NWDAF, network repository function, NRF, gateway mobile location centre, GMLC,
-- serving call state control function, S-CSCF, proxy call state control function, P-CSCF, interrogating call state control function, I-CSCF.

10. Method according to one of the preceding claims, wherein the parameter-related functionality (25) provides a specific application programming interface functionality which exposes one or more of the following functionalities within a mobile communications system:
-- mobility management, session management, short message service, user equipment policy, location services,
-- USIM,
-- IP multimedia subsystem managed object, IMS MO.

11. User equipment (20) for being operated or for applying a modified operation within or as part of a telecommunications network (100), wherein the operation or the modification of the operation of the user equipment (20) is conducted using a control plane functionality,
wherein the telecommunications network (100) comprises or is associated or assigned to an access network (110) and to a core network (120), wherein the core network (120) provides the user equipment (20) with data connectivity towards a data network (130),
wherein the user equipment (20) comprises or provides a parameter-related functionality (25) for operating or for modifying the operation of the user equipment (20) upon a request by a requesting entity or a requesting network node (190) external to the user equipment (20), wherein the requesting entity or the requesting network node (190) is part of the access network (110) or of the core network (120),
wherein the parameter-related functionality (25) is related or corresponds to a control plane functionality, and wherein the parameter-related functionality (25), as a control plane functionality or related therewith, communicates with or is accessible to a control plane network element of the telecommunications network (100), via a control plane channel,
wherein the user equipment (20) is configured to interact with an authorization functionality (170), the authorization functionality (170) being able to provide authorization information regarding or related to the parameter-related functionality (25) of the user equipment (20),
wherein, in order to operate or to modify the operation of the user equipment (20), the user equipment (20) is configured such that:
-- the user equipment (20) receives, from the authorization functionality (170), at least one piece of authorization information (280), and the user equipment (20) receives, from the requesting entity or the requesting network node (190), an authorization request message (290),
-- the user equipment (20) determines whether the authorization request (290) is valid, and if this is the case, processes the received authorization request message (290) according to its content.

12. System or telecommunications network (100) for operating or for modifying the operation of a user equipment (20) within or as part of the telecommunications network (100), wherein the operation or the modification of the operation of the user equipment (20) is conducted using a control plane functionality,
wherein the telecommunications network (100) comprises or is associated or assigned to an access network (110) and to a core network (120), wherein the core network (120) provides the user equipment (20) with data connectivity towards a data network (130),
wherein the user equipment (20) comprises or provides a parameter-related functionality (25) for operating or for modifying the operation of the user equipment (20) upon a request by a requesting entity or a requesting network node (190) external to the user equipment (20), wherein the requesting entity or the requesting network node (190) is part of the access network (110) or of the core network (120),
wherein the parameter-related functionality (25) is related or corresponds to a control plane functionality, and wherein the parameter-related functionality (25), as a control plane functionality or related therewith, communicates with or is accessible to a control plane network element of the telecommunications network (100), via a control plane channel,
wherein the telecommunications network (100) comprises or is assigned to or is able to access an authorization functionality (170), the authorization functionality (170) being able to provide authorization information regarding or related to the parameter-related functionality (25) of the user equipment (20), wherein, in order to operate or to modify the operation of the user equipment (20), the system of telecommunications network (100) is configured such that:
-- the authorization functionality (170) transmits at least one piece of authorization information (280) to the user equipment (20), and the requesting entity or the requesting network node (190) transmits an authorization request message (290) to the user equipment (20),
-- the user equipment (20) is configured to determine whether the authorization request (290) is valid, and if this is the case, to process the received authorization request message (290) according to its content.

13. Authorization functionality (170) of a system or a telecommunications network (100) according to claim 12.

14. Program comprising a computer readable program code which, when executed on a computer and/or on a user equipment (20) and/or on a authorization functionality (170) and/or on a network node of a telecommunications network (100), or in part on a user equipment (20) and/or in part on an authorization functionality (170) and/or in part on a network node of a telecommunications network (100), causes the computer and/or the user equipment (20) and/or the authorization functionality (170) and/or the network node of the telecommunications network (100) to perform a method according one of claims 1 to 10.

15. Computer-readable medium comprising instructions which, when executed on a computer and/or on a user equipment (20) and/or on a authorization functionality (170) and/or on a network node of a telecommunications network (100), or in part on a user equipment (20) and/or in part on an authorization functionality (170) and/or in part on a network node of a telecommunications network (100), causes the computer and/or the user equipment (20) and/or the authorization functionality (170) and/or the network node of the telecommunications network (100) to perform a method according one of claims 1 to 10.
